# EUROPEAN PATENT APPLICATION

(11) **EP 4 742 808 A1**
(43) Date of publication of application: **13.05.2026**
(21) Application number: 25212394.8
(22) Date of filing: 30.10.2025
(51) Int. Cl.: H04W 74/00, H04W 68/00, H04W 74/0833

(54) **PRACH ADAPTATION INDICATION USING PAGING DCI**

(30) Priority: 07.11.2024 US 202463717771 P
(71) Applicant: Nokia Technologies Oy, 02610 Espoo (FI)
(72) Inventor: KHLASS, Ahlem, Massy (FR); LASELVA, Daniela, Klarup (DK); MASO, Marco, Issy les Moulineaux (FR); FREDERIKSEN, Frank, Klarup (DK)
(74) Representative: Nokia EPO representatives

(57) **Abstract**

Apparatus and method of Physical Random-Access Channel (PRACH) adaptation. In an embodiment, an apparatus receives paging downlink control information (DCI) on a physical downlink control channel from a radio access network, determines a presence of a physical random-access channel (PRACH) adaptation indication in the paging DCI based at least on a short message indicator of the paging DCI, and decodes the PRACH adaptation indication from the paging DCI.

## Description

### Technical Field

This disclosure is related to the field of communication systems and, in particular, to next generation networks.

### Background

Next generation networks, such as Fifth Generation (5G) and beyond (e.g., Sixth Generation (6G)), denote the next major phase of mobile telecommunications standards beyond Fourth Generation (4G) standards. In comparison to 4G networks, next generation networks may be enhanced in terms of radio access and network architecture to deliver faster data rates and more reliability. 5G NR (New Radio) is a radio access technology (RAT) developed by the 3rd Generation Partnership Project (3GPP) for 5G mobile networks. In terms of 5G and beyond, network energy savings (NES) is of importance for environmental sustainability (i.e., to reduce environmental impact (greenhouse gas emissions)), and for operational cost savings. As 5G is becoming pervasive across industries and geographical areas, handling more advanced services and applications requiring very high data rates, networks are becoming denser, use more antennas, larger bandwidths, and more frequency bands. Thus, the environmental impact and energy consumption of 5G pose potential issues. For example, most of the energy consumption of a 5G network comes from the 5G NR access network (e.g., Active Antenna Unit (AAU)), with data centers and fiber transport accounting for a smaller share. The power consumption of radio access can be split into two parts: the dynamic part which is only consumed when data transmission/reception is ongoing, and the static part which is consumed all the time to maintain the necessary operation of the radio access devices, even when the data transmission/reception is not on-going.

It is therefore beneficial to identify improved techniques for addressing network energy savings.

### Summary

Described herein are enhanced techniques for addressing network energy savings in 5G networks and beyond. As an overview, network energy savings is provided via adaptation of the Physical Random-Access Channel (PRACH) in the time domain. Certain bits of paging Downlink Control Information (DCI) is used to signal a PRACH adaptation indication to an NES-capable UE (e.g., activate or deactivate PRACH adaptation). For example, a PRACH adaptation indication may be sent in reserved bits of the paging DCI, in reserved bits of a short message in the paging DCI, in reused or repurposed bits of the short message or the paging DCI, etc. One technical benefit is enhanced network flexibility in providing the PRACH adaptation indication to NES-capable UEs, possibly along with other information targeting legacy UEs and/or NES-capable UEs. In other words, the signaling structure of the paging DCI ensures the network ability to provide additional information in the paging DCI (such as short message and scheduling information for paging) also in the time instances where the PRACH adaptation indication is indicated by the paging DCI. Therefore, the presence of the PRACH adaptation indication in the paging DCI does not restrict the network flexibility to, for example, page UEs at the same time. Different bits or combinations of bits may be used in a paging DCI to send the PRACH adaptation indication. Another technical benefit is the PRACH adaptation minimizes any impact to legacy UEs, as the legacy UEs will ignore the PRACH adaptation indication in the paging DCI.

In an embodiment (also referred to as an aspect), an apparatus comprises at least one processor, and at least one memory storing instructions that, when executed by the at least one processor, cause the apparatus at least to perform: receiving paging downlink control information on a physical downlink control channel from a radio access network, determining a presence of a physical random-access channel adaptation indication in the paging downlink control information based at least on a short message indicator of the paging downlink control information, and decoding the physical random-access channel adaptation indication from the paging downlink control information.

In an embodiment, a method comprises receiving paging downlink control information on a physical downlink control channel from a radio access network, determining a presence of a physical random-access channel adaptation indication in the paging downlink control information based at least on a short message indicator of the paging downlink control information, and decoding the physical random-access channel adaptation indication from the paging downlink control information.

In an embodiment, an apparatus comprises a means for receiving paging downlink control information on a physical downlink control channel from a radio access network, a means for determining a presence of a physical random-access channel adaptation indication in the paging downlink control information based at least on a short message indicator of the paging downlink control information, and a means for decoding the physical random-access channel adaptation indication from the paging downlink control information.

In an embodiment, an apparatus comprises at least one processor, and at least one memory storing instructions that, when executed by the at least one processor, cause the apparatus at least to perform formatting paging downlink control information by setting at least a short message indicator of the paging downlink control information to indicate a presence of a physical random-access channel adaptation indication in the paging downlink control information, and provisioning the physical random-access channel adaptation indication in the paging downlink control information. The instructions when executed by the at least one processor, cause the apparatus at least to perform transmitting the paging downlink control information with the physical random-access channel adaptation indication on a physical downlink control channel.

In an embodiment, a method comprises formatting paging downlink control information by setting at least a short message indicator of the paging downlink control information to indicate a presence of a physical random-access channel adaptation indication in the paging downlink control information, and provisioning the physical random-access channel adaptation indication in the paging downlink control information. The method further comprises transmitting the paging downlink control information with the physical random-access channel adaptation indication on a physical downlink control channel.

In an embodiment, an apparatus comprises a means for formatting paging downlink control information by setting at least a short message indicator of the paging downlink control information to indicate a presence of a physical random-access channel adaptation indication in the paging downlink control information, and provisioning the physical random-access channel adaptation indication in the paging downlink control information. The apparatus further comprises a means for transmitting the paging downlink control information with the physical random-access channel adaptation indication on a physical downlink control channel.

Other embodiments may include computer readable media, other systems or apparatus, or other methods or means as described below. Also, one or more embodiments as described above may be combinable as described herein.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates a high-level architecture of a 5G system.
FIG. 2 illustrates a non-roaming architecture of a 5G system.
FIG. 3 illustrates an NG-RAN architecture.
FIG. 4 is a block diagram illustrating a 5G NR radio protocol stack.
FIG. 5 illustrates physical channels of the physical layer.
FIG. 6 illustrates a network energy saving model for a RAN in an illustrative embodiment.
FIG. 7 illustrates a Random-Access (RA) procedure.
FIG. 8A illustrates a frame structure with legacy RACH occasions.
FIG. 8B illustrates a frame structure with additional RACH occasions.
FIG. 9 is a block diagram of network elements/functions in an illustrative embodiment.
FIG. 10 is a block diagram of user equipment (UE) in an illustrative embodiment.
FIGS. 11A-11B are flow charts illustrating a method of performing PRACH adaptation in an illustrative embodiment.
FIG. 12 illustrates a paging DCI in an illustrative embodiment.
FIG. 13 illustrates a format of a paging DCI in an illustrative embodiment.
FIG. 14 illustrates a short message in an illustrative embodiment.
FIG. 15 illustrates a short message indicator in an illustrative embodiment.
FIG. 16 is an enhanced short message indicator in an illustrative embodiment.
FIG. 17 is an enhanced short message indicator in an illustrative embodiment.
FIGS. 18A-18B are flow charts illustrating additional details of the method in FIGS. 11A-11B in illustrative embodiments.
FIG. 19 is an enhanced short message indicator in an illustrative embodiment.
FIG. 20 is an enhanced short message indicator in an illustrative embodiment.
FIGS. 21A-21B are flow charts illustrating additional details of the method in FIGS. 11A-11B in illustrative embodiments.
FIG. 22 illustrates a paging DCI in an illustrative embodiment.
FIG. 23 is an enhanced short message indicator in an illustrative embodiment.
FIGS. 24A-24B are flow charts illustrating additional details of the method in FIGS. 11A-11B in illustrative embodiments.
FIGS. 25A-25B are flow charts illustrating additional details of the method in FIGS. 11A-11B in illustrative embodiments.
FIGS. 26A-26B are flow charts illustrating a method of performing PRACH adaptation in an illustrative embodiment.
FIG. 27 illustrates a PRACH adaptation indication in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

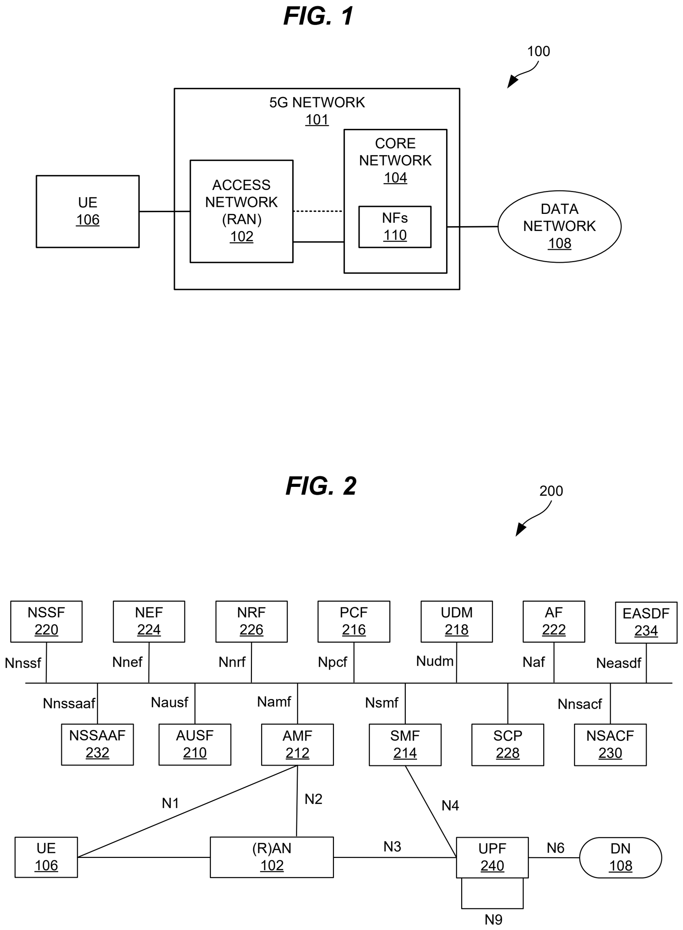

FIG. 1 illustrates a high-level architecture of a 5G system 100. A 5G system (5GS) 100 is a communication system (e.g., a 3GPP system) comprising a 5G Access Network ((R)AN) 102 (also referred to generally herein as a RAN) and a 5G core network 104 (also referred to generally as a core network or 5GC) that communicate with User Equipment (UE) 106. The RAN 102 and 5GC 104 together may be referred to as a 5G network 101, a 5G mobile network, a 5G communication network, a next generation network, etc. Although the term "5G" is used herein as an example, any next generation or future generation networks beyond 4G are considered, such as 6G. Thus, a "mobile network" and the concepts described herein apply to 5G and beyond.

RAN 102 provides radio or wireless connectivity to a UE 106, and connects the UE 106 to the 5GC 104. RAN 102 may comprise a Next Generation Radio Access Network (NG-RAN), a non-3GPP access network, and/or another type of RAN connecting to 5GC 104. RAN 102 may support Evolved-UMTS Terrestrial Radio Access Network (E-UTRAN) access (e.g., through an eNodeB (eNB), gNodeB (gNB), and/or ng-eNodeB (ng-eNB)), Wireless Local Area Network (WLAN) access, satellite radio access, new Radio Access Technologies (RAT), etc. A 5G access network may also support fixed access. 5GC 104 interconnects RAN 102 with a data network (DN) 108. 5GC 104 is comprised of Network Functions (NF) 110, which may be implemented either as a network element on dedicated hardware, as a software instance running on dedicated hardware, as a virtualized function instantiated on an appropriate platform (e.g., a cloud infrastructure), etc. Data network 108 may be an operator external public or private data network, or an intra-operator data network (e.g., for IP Multimedia Subsystem (IMS) services). A UE 106 (also referred to as a mobile terminal) may include a 5G capable device configured to register with 5GC 104 to access services. UE 106 may include an end user device, such as a mobile phone (e.g., smartphone), a tablet, a computer with a mobile broadband adapter, etc. UE 106 may be enabled for voice services, data services, Machine-to-Machine (M2M) or Machine Type Communications (MTC) services, and/or other services.

FIG. 2 illustrates a non-roaming architecture 200 of a 5G system 100. The architecture 200 in FIG. 2 is a service-based representation, as is further described in 3GPP TS 23.501 (Release 19), which is incorporated by reference as if fully included herein. Architecture 200 is comprised of Network Functions (NF) for a 5GC 104, and the NFs for the control plane (CP) are separated from the user plane (UP). The control plane of the 5GC 104 includes an Authentication Server Function (AUSF) 210, an Access and Mobility Management Function (AMF) 212, a Session Management Function (SMF) 214, a Policy Control Function (PCF) 216, a Unified Data Management (UDM) 218, a Network Slice Selection Function (NSSF) 220, and an Application Function (AF) 222. The control plane of the 5GC 104 further includes a Network Exposure Function (NEF) 224, a NF Repository Function (NRF) 226, a Service Communication Proxy (SCP) 228, a Network Slice Admission Control Function (NSACF) 230, a Network Slice-specific and SNPN Authentication and Authorization Function (NSSAAF) 232, and an Edge Application Server Discovery Function (EASDF) 234. The user plane of the 5GC 104 includes one or more User Plane Functions (UPF) 240 that communicate with data network 108. A UE 106 is able to access the control plane and the user plane of the 5GC 104 through RAN 102.

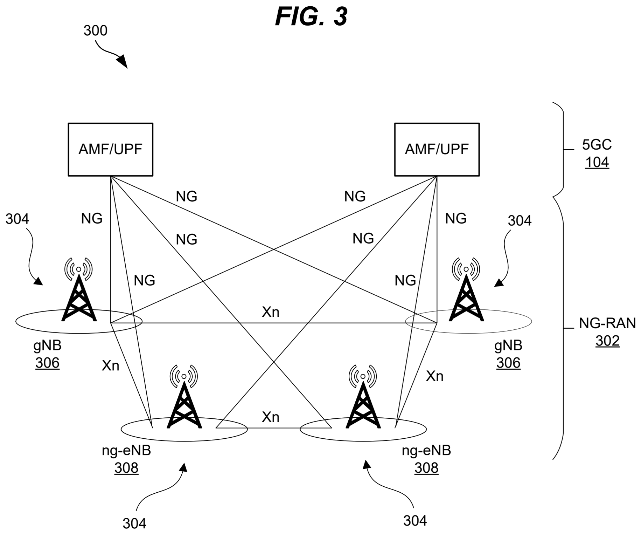

FIG. 3 illustrates an NG-RAN architecture 300. The NG-RAN architecture 300 is further described in 3GPP TS 38.300 (Release 18), which is incorporated by reference as if fully included herein. An NG-RAN 302 is an example of a RAN 102 as described above, and comprises a plurality of RAN nodes 304 (also referred to as NG-RAN nodes). A RAN node 304 may be a gNB 306 configured to provide new-radio user plane and control plane protocol terminations towards a UE 106, or an ng-eNB 308 configured to provide E-UTRA user plane and control plane protocol terminations towards a UE 106. The gNBs 306 and ng-eNBs 308 are interconnected with each other by means of the Xn interface. The gNBs 306 and ng-eNBs 308 are also connected by means of the NG interfaces to the 5GC 104, more specifically, to the AMF 212 by means of the NG-C interface and to the UPF 240 by means of the NG-U interface.

In general, a UE 106 of a 5G system has a home mobile network (e.g., home Public Land Mobile Network (HPLMN)), which is the PLMN in which the profile of a mobile subscriber is held. A UE 106 may have service availability when connected to the HPLMN through one or more access types, such as 3GPP access and non-3GPP access (trusted or untrusted). When a UE 106 roams onto another network (referred to as a serving or visited mobile network (VPLMN)) different than the HPLMN, the 5GC 104 of the HPLMN is able to interconnect or interwork with the visited mobile network so that the user can access services even when roaming outside of the HPLMN.

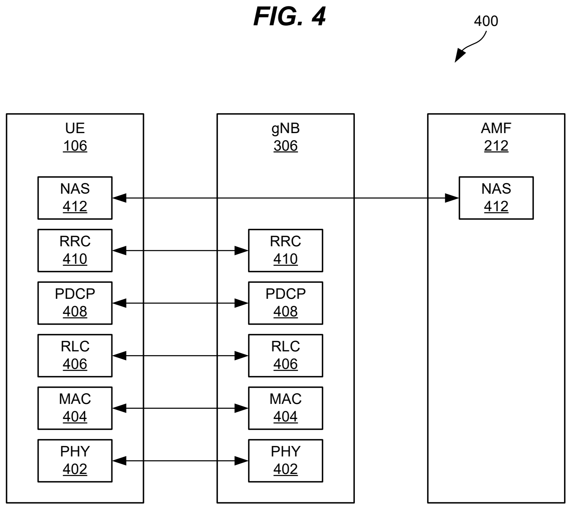

FIG. 4 is a block diagram illustrating a 5G NR radio protocol stack 400 for the control plane, as is further described in 3GPP TS 38.300. The radio protocol stack 400 comprises the following layers or sublayers: physical layer (PHY) 402, Medium Access Control (MAC) layer 404, Radio Link Control (RLC) layer 406, Packet Data Convergence Protocol (PDCP) layer 408, Radio Resource Control (RRC) layer 410, and Non-Access Stratum (NAS) layer 412. The NAS layer 412 (i.e., NAS control protocol) is terminated in an AMF 212 on the network side. The RRC layer 410, PDCP layer 408, RLC layer 406, MAC layer 404, and physical layer 402 are terminated in a gNB 306 on the network side.

The physical layer 402 includes certain functionalities to enable communication between a UE 106 and a gNB 306 (or other type of RAN node 304) over the radio or air interface. One of the functionalities is time synchronization to ensure that the transmission and reception of signals are precisely timed over the air interface (e.g., Synchronization Signal Block (SSB)). Another functionality is channelization, which is a process of defining multiple different physical resource properties and transmitting data (e.g., user traffic, control data, sync signal, etc.) via a different profile referred to as a "channel". Another functionality is power control where power levels used for signal transmission are managed to optimize performance and reduce interference. Another functionality is beam management of beamforming processes for directional signal transmission and reception. Another functionality is Channel State Information (CSI) reporting where a UE reports back to the network on the quality of a received signal. Another functionality is Multiple Input Multiple Output (MIMO) for multiplying the capacity of a radio link using multiple transmission and receiving antennas to exploit multipath propagation.

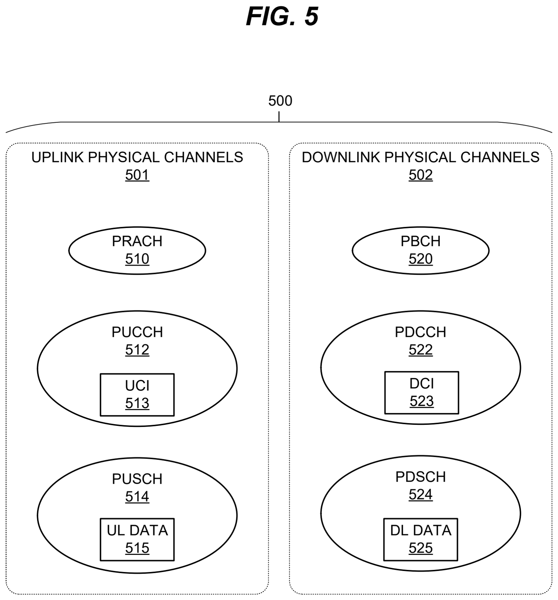

FIG. 5 illustrates physical channels 500 of the physical layer 402 used in channelization. The physical channels 500 include uplink (UL) physical channels 501 and downlink (DL) physical channels 502. The UL physical channels 501 are used for transmissions from a UE to a base station (e.g., gNB 306), and the DL physical channels 502 are used for transmissions from a base station to a UE. The physical channels 500 are divided into control channels for control plane transmissions, and data channels for user plane transmissions.

The UL physical channels 501 include the Physical Random-Access Channel (PRACH) 510, Physical Uplink Control Channel (PUCCH) 512, and the Physical Uplink Shared Channel (PUSCH) 514. PRACH 510 is used for channel access. In a RAN, the UEs 106 have to first identify and attach themselves to a gNB 306. This procedure is known as Random Access (RA). In order to facilitate RA procedures, a dedicated channel known as the PRACH 510 is used by a UE 106 to access a gNB 306. PUCCH 512 is a control channel that carries Uplink Control Information (UCI) 513. PUSCH 514 is a data channel used for uplink data transmission, such as to deliver UL data 515 from a UE 106 to a gNB 306.

The DL physical channels 502 include the Physical Broadcast Channel (PBCH) 520, Physical Downlink Control Channel (PDCCH) 522, and Physical Downlink Shared Channel (PDSCH) 524. PBCH 520 is used to broadcast a Master Information Block (MIB) from a gNB 306 to all UEs 106 (in range). PBCH 520 carries crucial information that a UE 106 needs to decode other broadcast information and to establish a connection with the network. PDCCH 522 is a control channel that carries Downlink Control Information (DCI) 523. PDSCH 524 is a data channel used for downlink data transmission, such as to deliver DL data 525 from a gNB 306 to a UE 106.

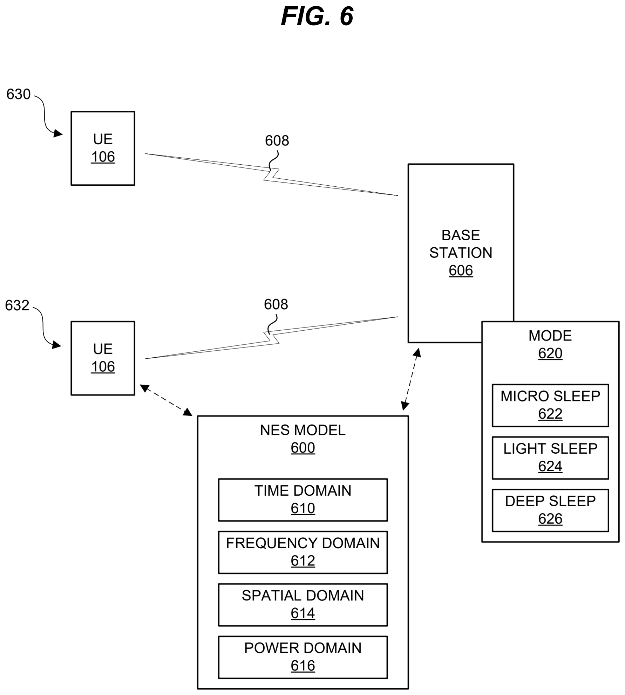

As described above, network energy savings (NES) within a RAN 102 is a consideration in terms of environmental sustainability and operational cost savings. Studies in network energy savings have focused on techniques in various domains. FIG. 6 illustrates a network energy saving model 600 for a RAN in an illustrative embodiment. FIG. 6 generally shows a base station 606 of a RAN configured to communicate with one or more UEs 106 over an air interface 608. A UE 106 may be a legacy UE 630 or a NES-capable UE 632. The network energy saving model 600 includes network energy saving techniques classified in the time domain 610, the frequency domain 612, the spatial domain 614, and the power domain 616. The techniques in the time domain 610 and the frequency domain 612 mainly aim to reduce the power consumption for the dynamic part by trying to shut down more symbols on one or more carriers to achieve base station micro sleep 622 (i.e., one of the sleep modes 620 of a base station 606), and even the static part by enlarging the interval between the contiguous active transmission/reception occasions to achieve base station light sleep 624 or deep sleep 626. The techniques in the spatial domain 614 and the power domain 616 mainly aim to reduce the power consumption of Transceiver (TRX) and power amplifiers by trying to shut down more spatial elements and/or reduce transmission power/power spectrum density, or increase the power amplifier efficiency.

One of the network energy saving techniques in 5G NR is adaptation of the Physical Random-Access Channel (PRACH) 510 in the time domain 610. As described above, the Random Access (RA) procedure allows a UE 106 to establish or resume a connection with the network when it does not have any dedicated resources for signaling (e.g., for initial access from RRC Idle/Inactive mode). The network is required to monitor for the regular PRACH transmission occasions, which may be potentially used by a UE 106.

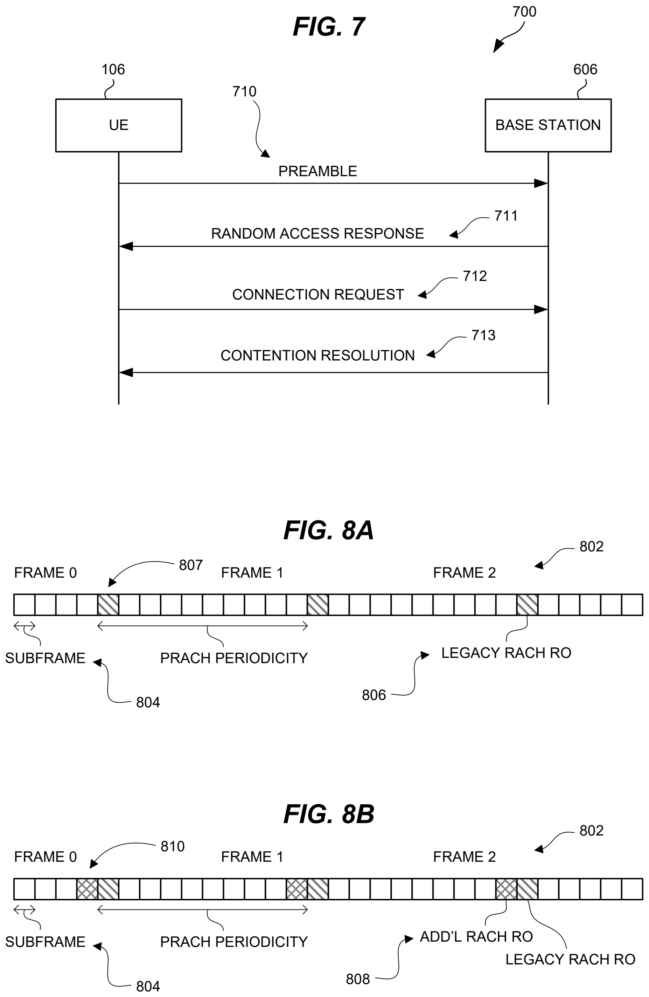

FIG. 7 illustrates a Random-Access (RA) procedure 700. This random-access procedure 700 includes the exchange of four messages between a UE 106 and a base station 606 (e.g., gNB 306). For message-1 (preamble transmission), the UE 106 selects a random-access preamble 710 from a set of predefined preambles, and sends the random-access preamble 710 to base station 606 on the PRACH 510. The random-access preamble 710 is a specific pattern or signature, and the preamble value differentiates requests coming from different devices. Upon receiving the random-access preamble 710, the base station 606 sends a Random-Access Response (RAR) message 711 (message-2) to the UE 106. The RAR message 711 includes a Timing Advance (TA) value so that the UE 106 may change its timing to compensate for the round-trip delay caused the distance between the UE 106 and base station 606, a RAPID (Random-Access Preamble ID) matching the random-access preamble 710 sent by the UE 106, and an uplink grant resource so that the UE 106 can use the PUSCH 514. The base station 606 also assigns a temporary identifier called RA-RNTI (Random-Access Radio Network Temporary Identifier) to the UE 106. The UE 106 sends an RRC connection request message 712 (message-3) to the base station 606 on the PUSCH 514. The RRC connection request message 712 includes an identity for the UE 106 (e.g., Temporary Mobile Subscriber Identity (TMSI) or Random Value). The TMSI is used if the UE 106 has previously connected to the network, and the random value is used when the UE 106 is initially connecting to the network. The RRC connection request message 712 also includes a connection establishment cause, which indicates the reason why the UE 106 needs to connect to the network. The base station 606 responds to the UE 106 with a contention resolution message 713 (message-4) acknowledging successful receipt of the RRC connection request message 712. The contention resolution message 713 is addressed towards the TMSI value or random number, and includes a new temporary Cell Radio Network Temporary Identity (C-RNTI), which is used for further communication.

Any UE 106 in range of a gNB 306 may initiate a RA procedure by transmitting a random-access preamble. The gNB 306 is therefore required to monitor for PRACH transmission occasions (also referred to as RACH Occasions (RO)) potentially used by the UEs 106. FIG. 8A illustrates a frame structure with legacy RACH occasions. FIG. 8A illustrates a portion of a DL frame structure in the time domain 610 comprising a plurality of frames 802 (e.g., overall length of 10 milliseconds (ms)), with each frame 802 divided into sub-frames 804 (e.g., ten sub-frames of 1 ms within each frame). The DL frame structure includes legacy PRACH resources 807 represented by legacy RACH ROs 806. Legacy RACH ROs 806 are configured according to a PRACH periodicity, such as one RACH RO 806 every ten sub-frames 804 or 10 ms.

Embodiments described herein provide for PRACH adaptation of PRACH resources in the time domain 610. In PRACH adaptation, additional PRACH resources are provisioned for NES-capable UEs 632 in addition to the legacy PRACH resources 807. FIG. 8B illustrates a frame structure with additional RACH occasions. As above, FIG. 8B illustrates a portion of a DL frame structure in the time domain 610 comprising a plurality of frames 802 with each frame 802 divided into sub-frames 804. In PRACH adaptation, additional PRACH resources 810 are provisioned as represented by additional RACH ROs 808. As illustrated in FIG. 8B, the additional RACH ROs 808 may be contiguous with the legacy RACH ROs 806. A legacy UE 630 (see FIG. 6) does not support PRACH adaptation that adapts the availability of additional PRACH resources 810 in the time domain 610, so a legacy UE 630 will use the legacy RACH ROs 806 for RA procedures. An NES-capable UE 632 (also referred to as an NES-enabled UE) supports PRACH adaptation that adapts the availability of additional PRACH resources 810 in the time domain 610, and may use both the additional PRACH resources 810 and legacy PRACH resources 807 for RA procedures.

It is noted that FIGS. 8A-8B show example frame structures, and other frame structures are considered herein.

One technical benefit of PRACH adaptation is flexible resource allocation. This allows for provisioning sparser PRACH resources for legacy UEs 630, such as in low-load scenarios, promoting energy savings, while providing additional PRACH resources 810 to NES-capable UEs 632 to increase RACH capacity when needed. The additional PRACH resources 810 are designed for more dynamic activation and deactivation compared to current mechanisms, responding to changes in PRACH load, such as increased or decreased demand. Also, PRACH adaptation aims to scale the PRACH monitoring activity by the network based on need, ensuring that energy consumption for initial access operations can decrease as the cell load decreases.

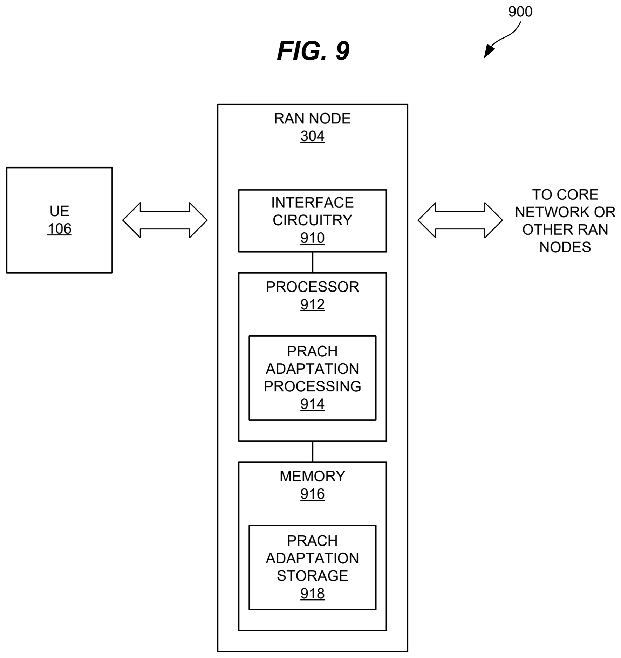

PRACH adaptation is performed between a UE 106 and a RAN 102. Block diagrams of these structural elements are as follows. FIG. 9 is a block diagram of network elements/functions in an illustrative embodiment. More particularly, the communication system 900 of FIG. 9 comprises a UE 106 and a RAN node 304. A RAN node 304 is an element/function of a RAN configured to provide a UE access to a core network 104 through 3GPP access over the air interface, such as a gNB 306, a base station 606, etc.

RAN node 304 comprises a processor 912 coupled to a memory 916 and interface circuitry 910. The processor 912 of RAN node 304 includes a PRACH adaptation processing module 914 that may be implemented at least in part in the form of software executed by the processor 912. The PRACH adaptation processing module 914 performs PRACH adaptation described in conjunction with subsequent figures and otherwise herein. The memory 916 includes a PRACH adaptation storage module 918 that stores data generated or otherwise used during PRACH adaptation operations. RAN node 304 is configured for communication with UE 106 and one or more network element/functions via interface circuitry 910. For example, interface circuitry 910 may be configured for radio communication over an air interface to communicate with a UE 106, and may be configured for backhaul communication with one or more network element/functions of the core network 104 or other RAN nodes 304.

The processor 912 may comprise, for example, microprocessors, application-specific integrated circuits (ASICs), field programmable gate arrays (FPGAs), digital signal processors (DSPs) or other types of processing devices or integrated circuits, as well as portions or combinations of such elements. Such integrated circuit devices, as well as portions or combinations thereof, are examples of "circuitry" as that term is used herein. A wide variety of other arrangements of hardware and associated software or firmware may be used in implementing the illustrative embodiments.

The memory 916 may be used to store one or more software programs that are executed by the processor 912 to implement at least a portion of the functionality described herein. For example, PRACH adaptation operations and other functionality as described in conjunction with subsequent figures and otherwise herein may be implemented in a straightforward manner using instructions or software code executed by processor 912.

The memory 916 may therefore be viewed as an example of what is more generally referred to herein as a computer program product or still more generally as a processor-readable storage medium that has executable program code embodied therein. Other examples of processor-readable storage media may include disks or other types of magnetic or optical media, in any combination. Illustrative embodiments can include articles of manufacture comprising such computer program products or other processor-readable storage media.

The memory 916 may more particularly comprise, for example, an electronic random-access memory (RAM), such as static RAM (SRAM), dynamic RAM (DRAM), or other types of volatile or non-volatile electronic memory. The latter may include, for example, non-volatile memories such as flash memory, magnetic RAM (MRAM), phase-change RAM (PC-RAM) or ferroelectric RAM (FRAM). The term "memory" as used herein is intended to be broadly construed, and may additionally or alternatively encompass, for example, a read-only memory (ROM), a disk-based memory, or other type of storage device, as well as portions or combinations of such devices.

Interface circuitry 910 may comprise transceivers or other communication hardware or firmware, Application Programming Interfaces (APIs), etc., that allows the associated system elements to communicate with one another in the manner described herein.

It is to be appreciated that the particular arrangement of components shown in FIG. 9 is an example, and numerous alternative configurations may be used in other embodiments. For example, any given network element/function can be configured to incorporate additional or alternative components and to support other communication protocols.

Other system elements may each also be configured to include components such as a processor, memory, and network interface. These elements need not be implemented on separate stand-alone processing platforms, but could instead, for example, represent different functional portions of a single common processing platform.

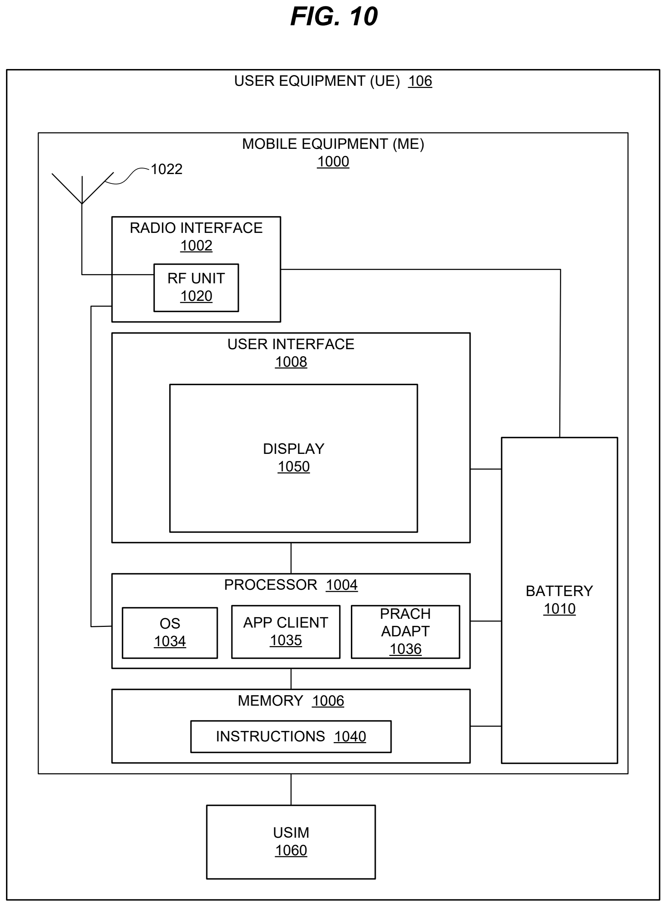

FIG. 10 is a block diagram of a UE 106 in an illustrative embodiment. From a functional standpoint, the UE 106 is composed of at least two parts: Mobile Equipment (ME) 1000 and a Universal Subscriber Identity Module (USIM) 1060. ME 1000 comprises a radio interface component 1002, one or more processors 1004, and a memory 1006, and may also comprise a user interface component 1008. The UE 106 may also comprise a battery 1010. Radio interface component 1002 is a hardware component or means that represents the local radio resources of the UE 106, such as a Radio Frequency (RF) unit 1020 (e.g., one or more radio transceivers) and one or more antennas 1022. Radio interface component 1002 may be configured for 5G New Radio (NR), Long Term Evolution (LTE), WiFi, Bluetooth, etc. Processor 1004 represents the internal circuitry, logic, hardware, means, etc., that provides the functions of the UE 106. Processor 1004 may be configured to execute instructions 1040 for software that are loaded into memory 1006. Processor 1004 may execute an Operating System (OS) 1034 for the UE 106 that manages hardware and software resources, and one or more application clients 1035 for an application. Processor 1004 may also execute a PRACH adaptation controller 1036 or module, which comprises a component or means for performing PRACH adaptation within the UE 106 (it is noted that PRACH adaptation controller 1036 may be implemented in RF unit 1020). Thus, the UE 106 in FIG. 10 may be considered a NES-capable UE 632. User interface component 1008 is a hardware component for interacting with an end user. For example, user interface component 1008 may comprise a display 1050, screen, touch screen, and/or the like (e.g., a Liquid Crystal Display (LCD), a Light Emitting Diode (LED) display, etc.). User interface component 1008 may include a keyboard or keypad, a tracking device (e.g., a trackball or trackpad), a speaker, a microphone, etc.

USIM 1060 is an integrated circuit that provides security and integrity functions for the UE 106. USIM 1060 includes or is provisioned with a subscription profile associated with a subscription of a subscriber. A subscription profile may include a variety of information, such as subscription credentials (e.g., Subscription Permanent Identifier (SUPI)) used to uniquely identify a subscription and to mutually authenticate the UE 106 and a network.

The UE 106 may comprise various other components not specifically illustrated in FIG. 10.

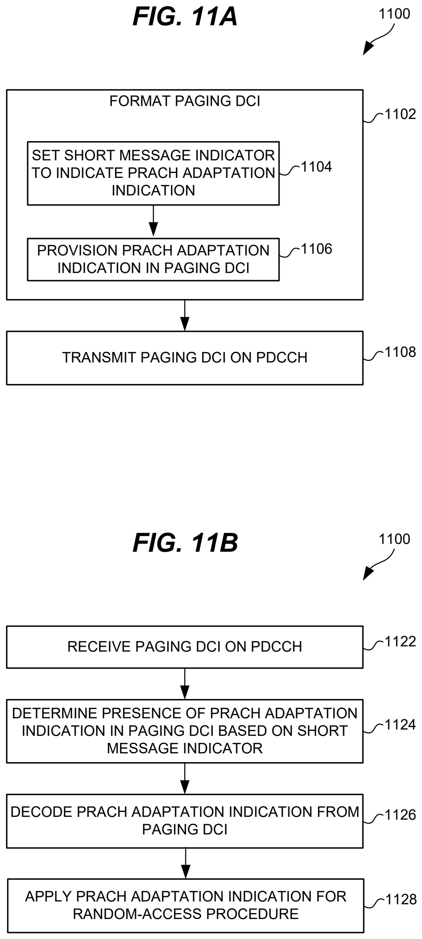

FIGS. 11A-11B are flow charts illustrating a method 1100 of performing PRACH adaptation in an illustrative embodiment. The steps of the method 1100 described in FIG. 11A may be performed in a RAN node 304, and the steps of method 1100 described in FIG. 11B may be performed in a UE 106. The steps of the flow charts described herein are not all inclusive and may include other steps not shown, and the steps may be performed in an alternative order.

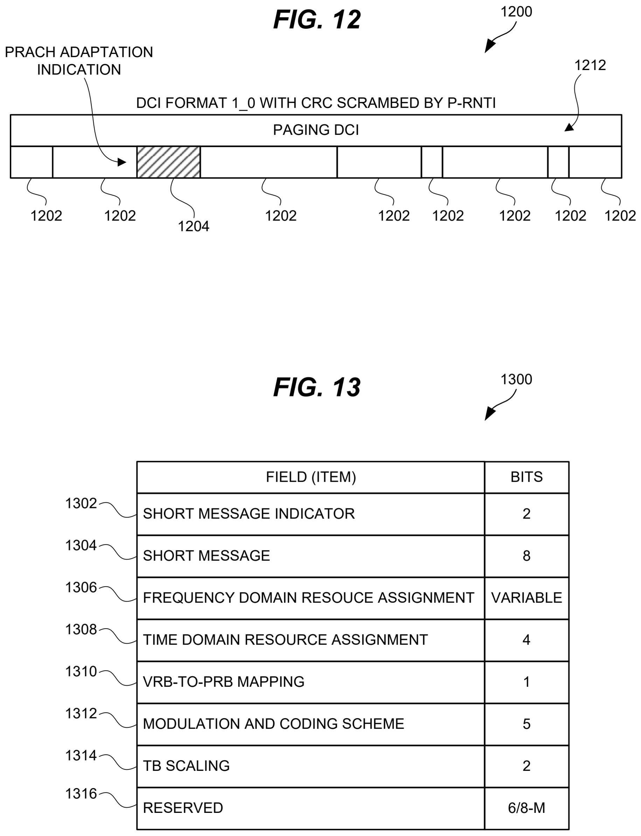

In FIG. 11A, one assumption is that PRACH adaptation is enabled in the RAN node 304. When PRACH adaptation is enabled, the RAN node 304 formats a paging DCI for a NES-capable UE 632 (step 1102). FIG. 12 illustrates a paging DCI 1200 in an illustrative embodiment. As described above, DCI may be used to carry information to schedule (allocate physical resources) DL data (PDSCH), carry information to schedule (allocate physical resources) UL data (PUSCH), carry information to adjust UL power (PUSCH, PUCCH power) for power control, etc. There are a variety of DCI types, such as defined in 3GPP TS 38.212 (Release 18), which is incorporated by reference as if fully included herein. One of the DCI types is DCI format 1_0 that is used for scheduling of PDSCH in one cell. The DCI format 1_0 with cyclic redundancy check (CRC) scrambled by a Paging-RNTI (P-RNTI) is referred to as the paging DCI 1200. The paging DCI 1200 includes a plurality of bits 1212 arranged into a plurality of fields 1202 (also referred to as items) that are populated by the network (i.e., a RAN node 304). In embodiments described herein, a PRACH adaptation indication 1204 (also referred to as PRACH adaptation indicator, PRACH adaptation information/instructions, etc.) is provisioned in the paging DCI 1200. A PRACH adaptation indication 1204 comprises information regarding PRACH adaptation, such as activation/deactivation of one or more additional PRACH resources 810 by the network (e.g., the serving cell of a UE 106), configuration parameters and/or associated values for the additional PRACH resources 810, etc. The PRACH adaptation indication 1204 may be provisioned in different fields 1202 or multiple fields 1202 of the paging DCI 1200, so the PRACH adaptation indication 1204 is shown generally in the paging DCI 1200 in a non-limiting manner. The paging DCI 1200 may also include scheduling information for paging a UE 106.

FIG. 13 illustrates a format 1300 of a paging DCI 1200 in an illustrative embodiment. According to format 1300, a paging DCI 1200 includes a short message indicator 1302 (e.g., two bits), a short message(s) 1304 (e.g., eight bits), a frequency domain resource assignment 1306 (e.g., variable number of bits), a time domain resource assignment 1308 (e.g., four bits), a Virtual Resource Block (VRB) to Physical Resource Block (PRB) mapping 1310 (e.g., one bit), a modulation and coding scheme 1312 (e.g., five bits), Transport Block (TB) scaling 1314 (e.g., two bits), and reserved bits 1316. The size of the reserved bits 1316 may be 6-M or 8-M bits, where M is used for Tracking Reference Signal (TRS) availability indication.

In FIG. 11A, as part of the formatting of the paging DCI 1200, the RAN node 304 sets at least the short message indicator 1302 to indicate the presence of a PRACH adaptation indication 1204 in the paging DCI 1200 (step 1104). The RAN node 304 provisions the PRACH adaptation indication 1204 in the paging DCI 1200 (step 1106). For example, the RAN node 304 may insert the PRACH adaptation indication 1204 at a certain location or position (or multiple positions) in the paging DCI 1200 (i.e., one or more fields 1202) corresponding with the short message indicator 1302. Thus, there may be a preconfigured mapping of a short message indicator 1302 to a particular location, position, bit(s), and/or field(s) 1202 in the paging DCI 1200. The RAN node 304 then transmits the paging DCI 1200 on the PDCCH 522 to the NES-capable UE 632 (step 1108).

In FIG. 11B, the NES-capable UE 632 receives the paging DCI 1200 on the PDCCH 522 (step 1122). The NES-capable UE 632 determines the presence of the PRACH adaptation indication 1204 in the paging DCI 1200 based at least on the short message indicator 1302 (step 1124). In an embodiment, the NES-capable UE 632 may determine the presence of the PRACH adaptation indication 1204 when (or only if) PRACH adaptation is configured by the network. The NES-capable UE 632 then decodes the PRACH adaptation indication 1204 from the paging DCI 1200 (step 1126). For example, the NES-capable UE 632 may identify a certain location, position, bit(s), and/or field(s) 1202 in the paging DCI 1200 carrying the PRACH adaptation indication 1204 based on the short message indicator 1302, and extract the PRACH adaptation indication 1204 from that location, position, bit(s) and/or field(s) 1202. The NES-capable UE 632 may then apply the PRACH adaptation indication 1204 for a RA procedure(s) (step 1128). For example, the NES-capable UE 632 may use additional PRACH resources 810 for an RA procedure when the PRACH adaptation indication 1204 indicates that they are activated, may use legacy PRACH resources 807 for an RA procedure when the PRACH adaptation indication 1204 indicates that additional PRACH resources 810 are deactivated, etc.

One technical benefit is enhanced network flexibility in providing the PRACH adaptation indication 1204 to NES-capable UEs 632, possibly along with other information to legacy UEs 630 and/or NES-capable UEs 632. A RAN node 304 may use some of the reserved bits 1316 in the paging DCI 1200, some (e.g., the reserved bits) or all of the bits for a short message 1304, repurpose or reuse the short message 1304 or other bits of the paging DCI 1200, etc., for the PRACH adaptation indication 1204. Another technical benefit is PRACH adaptation avoids or minimizes any impact to legacy UEs 630. For example, it is important to avoid unnecessary reception of the paging record by legacy UEs 630 when providing the PRACH adaptation indication 1204 via the paging DCI 1200. The use of the short message indicator 1302 as described herein to indicate the presence of a PRACH adaptation indication 1204 avoids any negative impact to legacy UEs 630.

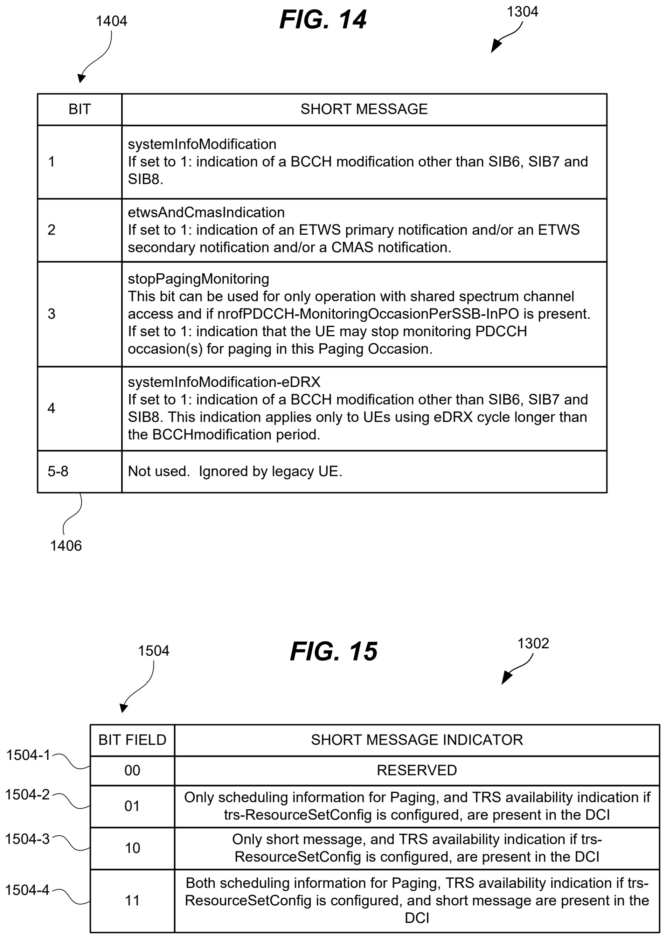

In an embodiment (also referred to as Option-1), the PRACH adaptation indication 1204 may be provisioned or inserted in one or more reserved bits of a short message 1304 in the paging DCI 1200. FIG. 14 illustrates a short message 1304 in an illustrative embodiment. A short message with a similar format is provided in 3GPP TS 38.331 (Release 18), which is incorporated by reference as if fully included herein. The short message 1304 comprises a number of bits 1404 (e.g., eight bits). Bits 1-4 are defined to carry various information. Bits 5-8 of the short message 1304 are unused by legacy UEs 630, and are referred to as reserved bits 1406. The PRACH adaptation indication 1204 may be provisioned or inserted in one or more of the reserved bits 1406. In this configuration, up to the four bits of the short message 1304 may be used to carry the PRACH adaptation indication 1204.

To indicate the PRACH adaptation indication 1204 in the paging DCI 1200 for this example, the short message indicator 1302 may be set to a value of "10" or "11". FIG. 15 illustrates a short message indicator 1302 in an illustrative embodiment. A short message indicator 1302 with a similar format is provided in 3GPP TS 38.212. The short message indicator 1302 includes a plurality of bit field values 1504. The bit field value 1504-3 of "10" or the bit field value 1504-4 of "11" may be used to indicate the PRACH adaptation indication 1204 when the PRACH adaptation indication 1204 is provisioned in the reserved bit(s) 1406 of the short message 1304. The network (e.g., a RAN node 304) may use "10" or "11" as the value of the short message indicator 1302 based on whether only the short message 1304, or paging information and the short message 1304 is required for a legacy UE 630.

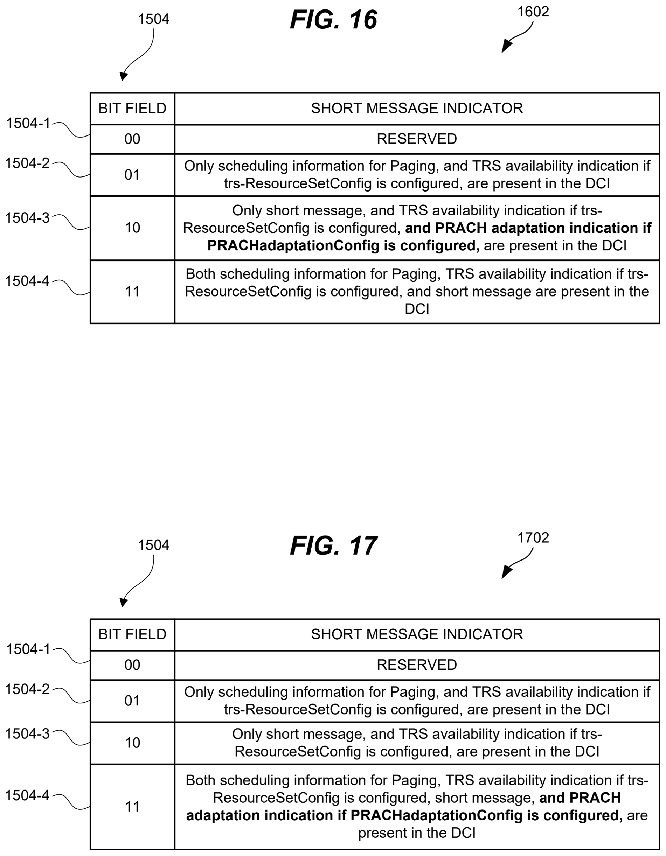

FIG. 16 is an enhanced short message indicator 1602 in an illustrative embodiment. The enhanced short message indicator 1602 for bit field value 1504-3 of "10" signifies that the PRACH adaptation indication 1204 is included in the paging DCI 1200. Up to four bits of the reserved bits 1406 of the short message 1304 may be used for the PRACH adaptation indication 1204. Legacy UEs 630 will ignore the reserved bits 1406 of the short message 1304 as per current behavior.

FIG. 17 is an enhanced short message indicator 1702 in an illustrative embodiment. The enhanced short message indicator 1702 for bit field value 1504-4 of "11" signifies that the PRACH adaptation indication 1204 is included in the paging DCI 1200. Up to four bits of the reserved bits 1406 of the short message 1304 may be used for the PRACH adaptation indication 1204. Legacy UEs 630 will ignore the reserved bits 1406 of the short message 1304 as per current behavior.

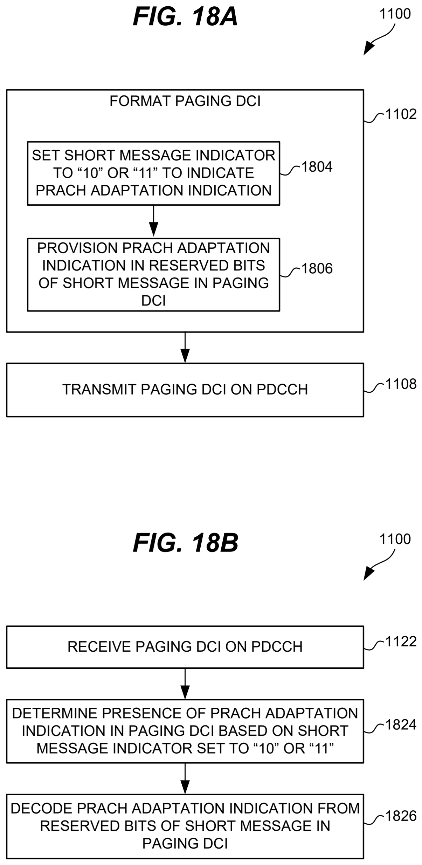

FIGS. 18A-18B are flow charts illustrating additional details of method 1100 in illustrative embodiments. In FIG. 18A, the RAN node 304 formats a paging DCI for a NES-capable UE 632 (step 1102) as described above. As part of the formatting, RAN node 304 sets at least the short message indicator 1302 to "10" or "11" to indicate the presence of a PRACH adaptation indication 1204 in the paging DCI 1200 (step 1804). The RAN node 304 provisions the PRACH adaptation indication 1204 in the reserved bits 1406 of the short message 1304 of the paging DCI 1200 (step 1806). The RAN node 304 then transmits the paging DCI 1200 on the PDCCH 522 to the NES-capable UE 632 (step 1108).

In FIG. 18B, the NES-capable UE 632 receives the paging DCI 1200 on the PDCCH 522 (step 1122). The NES-capable UE 632 determines the presence of the PRACH adaptation indication 1204 in the paging DCI 1200 based at least on the short message indicator 1302 set to "10" or "11" (step 1824). When the short message indicator 1302 is set to "10" or "11", the NES-capable UE 632 decodes the PRACH adaptation indication 1204 from the reserved bits 1406 of the short message 1304 in the paging DCI 1200 (step 1826).

One technical benefit of Option-1 is enhanced network flexibility in providing the PRACH adaptation indication 1204 in the reserved bits 1406 of the short message 1304, which are presently unused. A NES-capable UE 632 may be programmed to process the reserved bits 1406 of the short message 1302 when the short message indicator 1302 is set to "10" or "11" in order to access the PRACH adaptation indication 1204 of the paging DCI 1200. Another technical benefit is a legacy UE 630 would not attempt to process the PRACH adaptation indication 1204 in the reserved bits 1406 of the short message 1304, thus conserving energy. Both the bit field values 1504 of "10" and "11" indicate that a short message 1304 is included in the paging DCI 1200, but the PRACH adaptation indication 1204 is included in the reserved bits 1406 of the short message 1302. Thus, a legacy UE 630 will ignore the PRACH adaptation indication 1204 contained in the reserved bits 1406.

In an embodiment (also referred to as Option-2), the PRACH adaptation indication 1204 may be provisioned or inserted in one or more bits 1404 (e.g., bits 1-8) of the short message 1304, which may or may not include the reserved bits 1406 (see FIG. 14). In this configuration, up to the eight bits 1404 of the short message 1304 may be used to carry the PRACH adaptation indication 1204. Some of the bits 1404 of the short message 1304 may be re-used or re-purposed for the PRACH adaptation indication 1204 (those bits cannot indicate legacy information).

To indicate the PRACH adaptation indication 1204 in the paging DCI 1200 for this example, the short message indicator 1302 may be set to a value of "00" or "01". The bit field value 1504-1 of "00" or the bit field value 1504-2 of "01" may be used to indicate the PRACH adaptation indication 1204 when the PRACH adaptation indication 1204 is provisioned in the bit(s) 1404 of the short message 1304. In both cases, it is noted that the bit field value 1504 does not indicate the presence of a short message 1304 to a legacy UE 630.

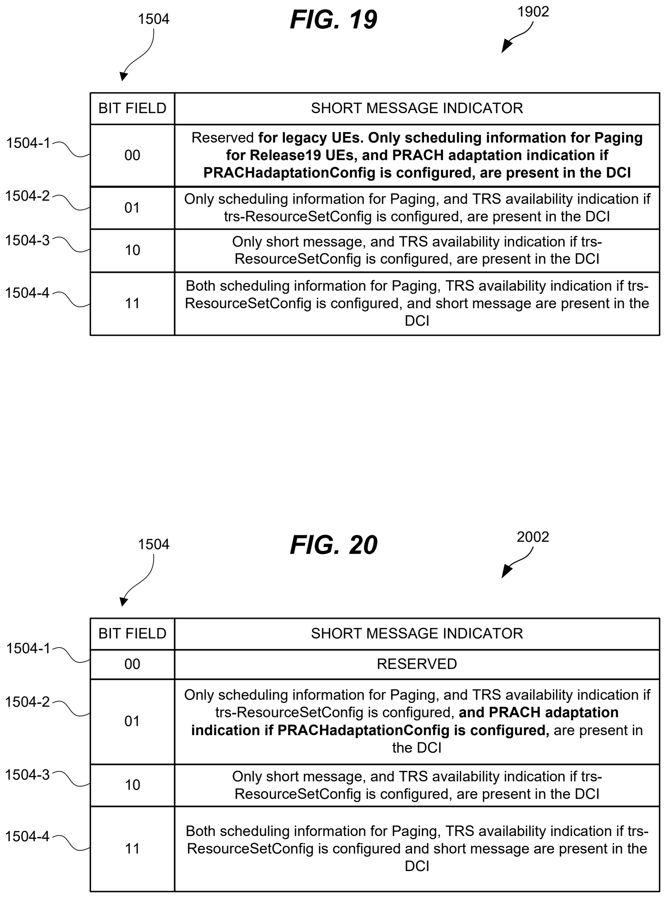

FIG. 19 is an enhanced short message indicator 1902 in an illustrative embodiment. The enhanced short message indicator 1902 for bit field value 1504-1 of "00" signifies that the PRACH adaptation indication 1204 is included in the paging DCI 1200, and may also indicate that scheduling information is included for paging of a NES-capable UE 632. Up to eight bits of the short message 1304 may be used for the PRACH adaptation indication 1204. Legacy UEs 630 will ignore the short message 1304 as per current behavior.

FIG. 20 is an enhanced short message indicator 2002 in an illustrative embodiment. The enhanced short message indicator 2002 for bit field value 1504-2 of "01" signifies that the PRACH adaptation indication 1204 is included in the paging DCI 1200. Up to eight bits of the short message 1304 may be used for the PRACH adaptation indication 1204. Legacy UEs 630 will ignore the short message 1304 as per current behavior.

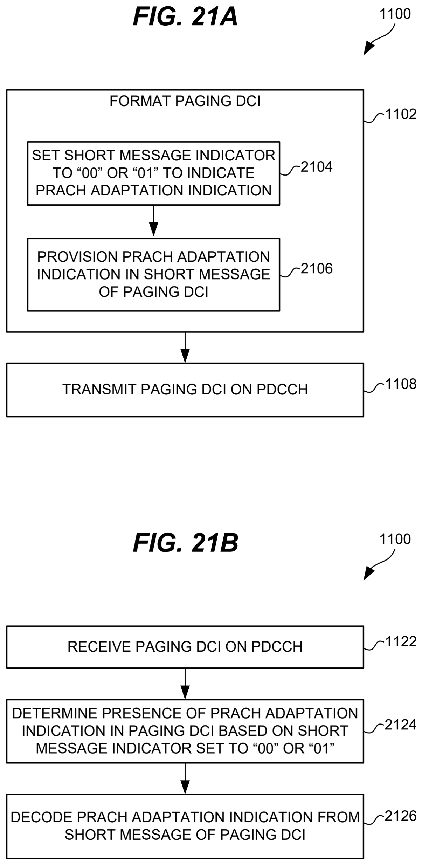

FIGS. 21A-21B are flow charts illustrating additional details of method 1100 in illustrative embodiments. In FIG. 21A, the RAN node 304 formats a paging DCI for a NES-capable UE 632 (step 1102) as described above. As part of the formatting, the RAN node 304 sets at least the short message indicator 1302 to "00" or "01" to indicate the presence of a PRACH adaptation indication 1204 in the paging DCI 1200 (step 2104). The RAN node 304 provisions the PRACH adaptation indication 1204 in the short message 1304 of the paging DCI 1200 (step 2106). The RAN node 304 then transmits the paging DCI 1200 on the PDCCH 522 to the NES-capable UE 632 (step 1108).

In FIG. 21B, the NES-capable UE 632 receives the paging DCI 1200 on the PDCCH 522 (step 1122). The NES-capable UE 632 determines the presence of the PRACH adaptation indication 1204 in the paging DCI 1200 based at least on the short message indicator 1302 set to "00" or "01" (step 2124). When the short message indicator 1302 is set to "00" or "01", the NES-capable UE 632 decodes the PRACH adaptation indication 1204 from the short message 1304 of the paging DCI 1200 (step 2126).

One technical benefit of Option-2 is enhanced network flexibility in providing the PRACH adaptation indication 1204 in the short message 1304. A NES-capable UE 632 may be programmed to process the short message 1302 when the short message indicator 1302 is set to "00" or "01" in order to access the PRACH adaptation indication 1204 of the paging DCI 1200. Another technical benefit is a legacy UE 630 would not attempt to process the PRACH adaptation indication 1204 contained in the short message 1304, thus conserving energy. A short message indicator 1302 of "00" is ignored by a legacy UE 630. A short message indicator 1302 of "01" indicates only scheduling information is included in the paging DCI 1200, and a legacy UE 630 will ignore the short message 1304.

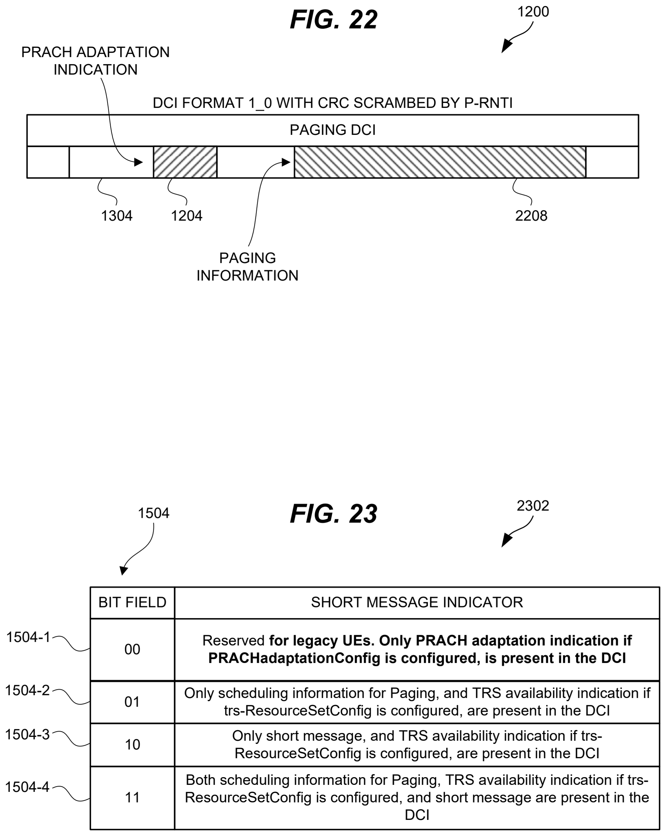

In an embodiment, the PRACH adaptation indication 1204 may be provisioned or inserted in the short message 1304 of the paging DCI 1200, and paging information may be provisioned or inserted in the paging DCI 1200. FIG. 22 illustrates a paging DCI 1200 in an illustrative embodiment. In an embodiment, the PRACH adaptation indication 1204 is provisioned in the short message 1304 of the paging DCI 1200, and paging information 2208 is also provisioned in the paging DCI 1200. The paging information 2208 may be provisioned in different fields 1202 or multiple fields 1202 of the paging DCI 1200, so the paging information 2208 is shown generally in the paging DCI 1200 in a non-limiting manner. One technical benefit is additional PRACH resources 810 may be applied (e.g., only) for responding to paging. In this case, deactivation after a configured timer may be applied.

In an embodiment, both Option-1 and Option-2 may be supported, where the PRACH adaptation indication 1204 carried in the two options differs. In one example, the network may activate or deactivate an additional PRACH resource 810 with less bits (i.e., the four reserved bits 1406 of the short message 1304), but may require more bits to indicate one or more configuration parameters for PRACH adaptation. Thus, the network may choose to use one of the two options based on what PRACH adaptation indication 1204 is to be transmitted and, for the chosen option, may populate the corresponding short message indicator 1302 (e.g., "10" or "11" for Option-1, or "00" or "01" for Option-2).

In an embodiment (also referred to as Option-3), the PRACH adaptation indication 1204 may be provisioned or inserted in one or more bits 1212 of the paging DCI 1200. In this configuration, more than eight bits 1404 may be used to carry the PRACH adaptation indication 1204. Some of the bits 1404 of the paging DCI 1200 may be re-used or re-purposed for the PRACH adaptation indication 1204 (those bits cannot indicate legacy information).

To indicate the PRACH adaptation indication 1204 in the paging DCI 1200 for this example, the short message indicator 1302 may be set to a value of "00" or "10". The bit field value 1504-1 of "00" or the bit field value 1504-3 of "10" may be used to indicate the PRACH adaptation indication 1204 when the PRACH adaptation indication 1204 is provisioned in the bit(s) 1212 of the paging DCI 1200. For example, bit field value 1504-1 of "00" is not used by a legacy UE 630, and the PRACH adaptation indication 1204 may be provisioned in one or more bits 1212 of the paging DCI 1200 when the bit field value 1504 is set to "00". In another example, the bit field value 1504-1 of "10" is used to signal to a legacy UE 630 that only a short message 1304 is carried in the paging DCI 1200. Thus, the PRACH adaptation indication 1204 may be provisioned in one or more bits 1212 of the paging DCI 1200 excluding the short message 1304 when the bit field value 1504 is set to "10", such as the frequency domain resource assignment 1306, the time domain resource assignment 1308, etc.

FIG. 23 is an enhanced short message indicator 2302 in an illustrative embodiment. The enhanced short message indicator 2302 for bit field value 1504-1 of "00" signifies that the PRACH adaptation indication 1204 is included in the paging DCI 1200. A subset of bits of the paging DCI 1200 may be used for the PRACH adaptation indication 1204. Legacy UEs 630 will ignore the paging DCI 1200 as per current behavior.

In FIG. 16, the enhanced short message indicator 1602 for bit field value 1504-3 of "10" signifies that the PRACH adaptation indication 1204 is included in the paging DCI 1200. A subset of bits of the paging DCI 1200 (except for short message indicator 1302, short message 1304, and TRS-related bits) may be repurposed for the PRACH adaptation indication 1204. Legacy UEs 630 will consider the short message 1304, and for TRS-related bits only, and ignore the remaining bits in the paging DCI 1200 as per current behavior.

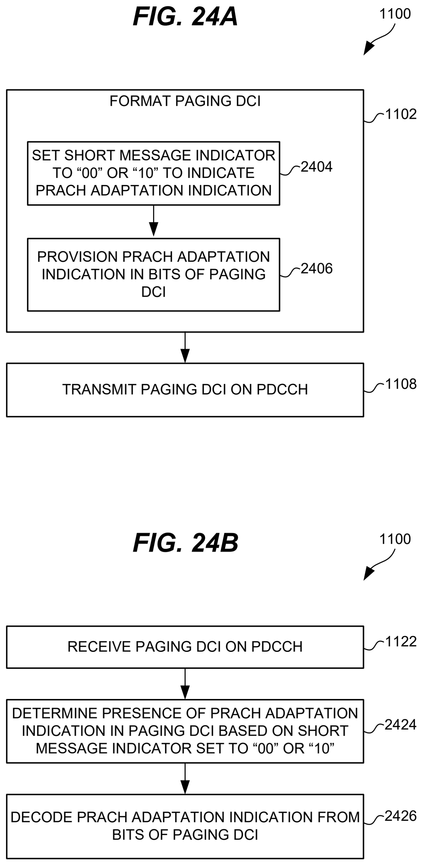

FIGS. 24A-24B are flow charts illustrating additional details of method 1100 in illustrative embodiments. In FIG. 24A, the RAN node 304 formats a paging DCI for a NES-capable UE 632 (step 1102) as described above. As part of the formatting, the RAN node 304 sets at least the short message indicator 1302 to "00" or "10" to indicate the presence of a PRACH adaptation indication 1204 in the paging DCI 1200 (step 2404). The RAN node 304 provisions the PRACH adaptation indication 1204 in one or more bits 1212 of the paging DCI 1200 (step 2406). The RAN node 304 then transmits the paging DCI 1200 on the PDCCH 522 to the NES-capable UE 632 (step 1108).

In FIG. 24B, the NES-capable UE 632 receives the paging DCI 1200 on the PDCCH 522 (step 1122). The NES-capable UE 632 determines the presence of the PRACH adaptation indication 1204 in the paging DCI 1200 based at least on the short message indicator 1302 set to "00" or "10" (step 2424). When the short message indicator 1302 is set to "00" or "10", the NES-capable UE 632 decodes the PRACH adaptation indication 1204 from one or more bits 1212 of the paging DCI 1200 (step 2426).

One technical benefit of Option-3 is enhanced network flexibility in providing the PRACH adaptation indication 1204 in bits (i.e., a subset of) the paging DCI 1200. A NES-capable UE 632 may be programmed to process certain bits 1212 of the paging DCI 1200 when the short message indicator 1302 is set to "00" or "10" in order to access the PRACH adaptation indication 1204. Further, this option allows for even more extended signaling availability (i.e., greater than four bits, eight bits, etc., if needed). Another technical benefit is a legacy UE 630 would not attempt to process the PRACH adaptation indication 1204 contained in the paging DCI 1200, thus conserving energy. A short message indicator 1302 of "00" is ignored by a legacy UE 630. A short message indicator 1302 of "10" indicates only a short message 1304 is included in the paging DCI 1200, and a legacy UE 630 will ignore other portions of the paging DCI 1200.

In an embodiment (also referred to as Option-4), the PRACH adaptation indication 1204 may be provisioned or inserted in one or more reserved bits 1316 of the paging DCI 1200. In this configuration, up to 6-M or 8-M of reserved bits 1316 may be used to carry the PRACH adaptation indication 1204, where M is the number of bits for the field of "TRS availability indication". When PRACH adaptation is configured, the number of bits that can assigned for "TRS availability indication" will be limited to k bits, with k<M.

To indicate the PRACH adaptation indication 1204 in the paging DCI 1200 for this example, the short message indicator 1302 may be set to a value of "10". The bit field value 1504-1 of "10" may be used to indicate the PRACH adaptation indication 1204 when the PRACH adaptation indication 1204 is provisioned in the reserved bits 1316 of the paging DCI 1200.

In FIG. 16, the enhanced short message indicator 1602 for bit field value 1504-3 of "10" signifies that the PRACH adaptation indication 1204 is included in the paging DCI 1200. Up to 6-M or 8-M of the reserved bits 1316 of the paging DCI 1200 may be used for the PRACH adaptation indication 1204. Legacy UEs 630 ignore the reserved bits 1316 of the paging DCI 1200 as per current behavior.

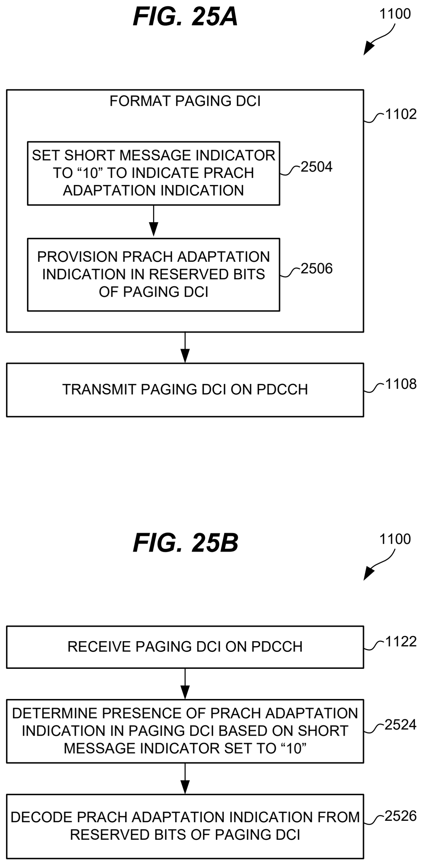

FIGS. 25A-25B are flow charts illustrating additional details of method 1100 in illustrative embodiments. In FIG. 25A, the RAN node 304 formats a paging DCI for a NES-capable UE 632 (step 1102) as described above. As part of the formatting, the RAN node 304 sets at least the short message indicator 1302 to "10" to indicate the presence of a PRACH adaptation indication 1204 in the paging DCI 1200 (step 2504). The RAN node 304 provisions the PRACH adaptation indication 1204 in one or more reserved bits 1316 of the paging DCI 1200 (step 2506). The RAN node 304 then transmits the paging DCI 1200 on the PDCCH 522 to the NES-capable UE 632 (step 1108).

In FIG. 25B, the NES-capable UE 632 receives the paging DCI 1200 on the PDCCH 522 (step 1122). The NES-capable UE 632 determines the presence of the PRACH adaptation indication 1204 in the paging DCI 1200 based at least on the short message indicator 1302 set to "10" (step 2524). When the short message indicator 1302 is set to "10", the NES-capable UE 632 decodes the PRACH adaptation indication 1204 from one or more reserved bits 1316 of the paging DCI 1200 (step 2526).

One technical benefit of Option-4 is enhanced network flexibility in providing the PRACH adaptation indication 1204 in one or more reserved bits 1316 of the paging DCI 1200. A NES-capable UE 632 may be programmed to process the reserved bits 1316 of the paging DCI 1200 when the short message indicator 1302 is set to "10" in order to access the PRACH adaptation indication 1204. Another technical benefit is a legacy UE 630 would not attempt to process the PRACH adaptation indication 1204 contained in the paging DCI 1200, thus conserving energy. A legacy UE 630 will ignore the PRACH adaptation indication 1204 contained in the reserved bits 1316.

In the embodiments described above, a single option may be specified (e.g., adopted by a standards body, for example), where the PRACH adaptation indication 1204 is a fixed number of bits. For example, up to four bits of the reserved bits 1406 of the short message 1304 may be used for the PRACH adaptation indication 1204, such as in Option-1, up to eight bits of a short message 1304 may be used for the PRACH adaptation indication 1204, such as in Option-2, etc. In another embodiment, multiple options may be specified, where different numbers of bits may be used for the PRACH adaptation indication 1204, such as depending on need.

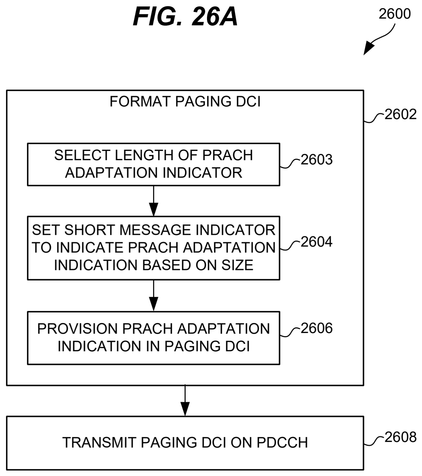

FIGS. 26A-26B are flow charts illustrating a method 2600 of performing PRACH adaptation in an illustrative embodiment. Any features or functions described above may be combined herein as desired. One assumption is that the PRACH adaptation indication 1204 may be of variable length. In FIG. 26A, the RAN node 304 formats a paging DCI 1200 for a NES-capable UE 632 (step 2602). As part of the formatting, the RAN node 304 selects or determines a length, size, or number of bits of a PRACH adaptation indication 1204 (step 2603). RAN node 304 sets at least the short message indicator 1302 to indicate the presence of a PRACH adaptation indication 1204 in the paging DCI 1200 based on the size of the PRACH adaptation indication 1204 (step 2604). For example, when the PRACH adaptation indication 1204 is four bits or less, the RAN node 304 may set the short message indicator 1302 to "10" or "11". When the PRACH adaptation indication 1204 is more than four bits, the RAN node 304 may set the short message indicator 1302 to "00" or "01". The RAN node 304 provisions the PRACH adaptation indication 1204 in the paging DCI 1200 based on the size of the PRACH adaptation indication 1204 and/or the setting of the short message indicator 1302 (step 2606). For example, when the PRACH adaptation indication 1204 is four bits or less and the short message indicator 1302 is set to "10" or "11", the RAN node 304 may provision the PRACH adaptation indication 1204 in the reserved bits 1406 of the short message 1304 in the paging DCI 1200. When the PRACH adaptation indication 1204 is more than four bits and/or the short message indicator 1302 is set to "00" or "01", the RAN node 304 may provision the PRACH adaptation indication 1204 in the short message 1304 of the paging DCI 1200. The RAN node 304 then transmits the paging DCI 1200 on the PDCCH 522 to the NES-capable UE 632 (step 2608).

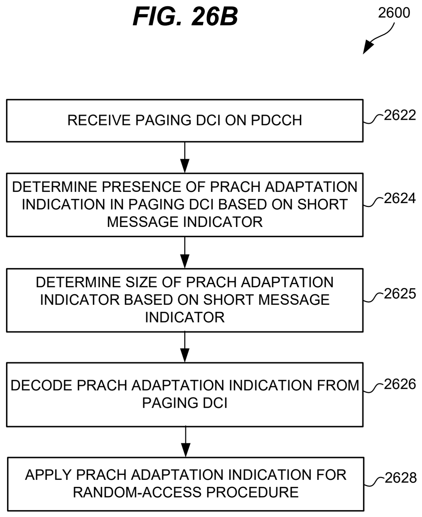

In FIG. 26B, the NES-capable UE 632 receives the paging DCI 1200 on the PDCCH 522 (step 2622). The NES-capable UE 632 determines the presence of the PRACH adaptation indication 1204 in the paging DCI 1200 based at least on the short message indicator 1302 (step 2624). The NES-capable UE 632 further determines a length, size, or number of bits of a PRACH adaptation indication 1204 (e.g., a first size or a second size different than the first size) based at least on the short message indicator 1302 (step 2625). The NES-capable UE 632 decodes the PRACH adaptation indication 1204 from the paging DCI 1200 (step 2626). For example, the NES-capable UE 632 may identify a certain location, position, bit(s), and/or field(s) 1202 in the paging DCI 1200 carrying the PRACH adaptation indication 1204 based on the short message indicator 1302 and/or the size of the PRACH adaptation indication 1204, and extract the PRACH adaptation indication 1204 from that location, position, bit(s), and/or field(s) 1202. The NES-capable UE 632 may then apply the PRACH adaptation indication 1204 for a RA procedure(s) (step 2628). For example, the NES-capable UE 632 may use additional PRACH resources 810 for an RA procedure when the PRACH adaptation indication 1204 indicates that they are activated, may use legacy PRACH resources for an RA procedure when the PRACH adaptation indication 1204 indicates that additional PRACH resources 810 are deactivated, etc.

One technical benefit is enhanced network flexibility in providing the PRACH adaptation indication 1204, possibly along with other information, to NES-capable UEs 632. A RAN node 304 may use a smaller number of bits in the paging DCI 1200 for the PRACH adaptation indication 1204 in some circumstances, and use a larger number of bits in other circumstances. Another technical benefit is PRACH adaptation minimizes any impact to legacy UEs 630. The use of the short message indicator 1302 as described herein to indicate the presence of a PRACH adaptation indication 1204 avoids any negative impact to legacy UEs 630.

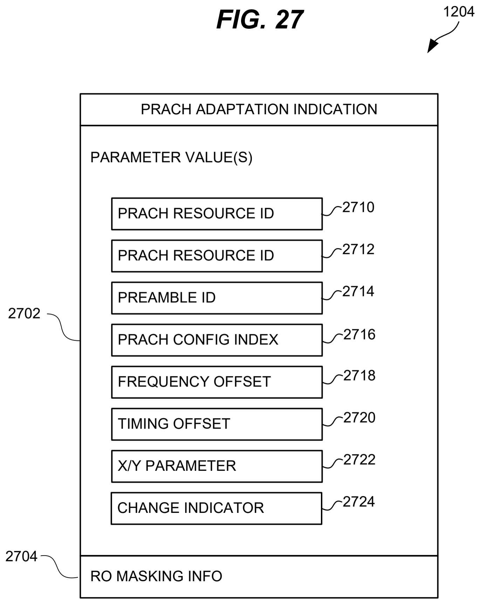

In an embodiment, the content of the PRACH adaptation indication 1204 may vary as desired. FIG. 27 illustrates a PRACH adaptation indication 1204 in an illustrative embodiment. The content of the PRACH adaptation indication 1204 may include one or more of the following. The content may include at least one parameter value 2702 (e.g., out of multiple parameter values) that can be configured in System Information for PRACH adaptation. Examples of the parameters may include:
- a PRACH resource identifier (ID) 2710 to adapt (e.g., activate/deactivate PRACH resource(s), or toggle status from ON to OFF or OFF to ON, PRACH resource(s) activated and used to respond to paging only, etc.), and/or a PRACH resources bitmap indicating which PRACH resource ID;
- a PRACH resource type 2712 to adapt (legacy PRACH resources vs. additional PRACH resource);
- a preamble ID 2714 or a preamble set ID to adapt;
- a PRACH configuration index 2716 to adapt;
- a frequency offset 2718 to a legacy frequency domain parameter to adapt;
- a timing offset 2720 at frame level or slot level;
- an x/y parameter 2722 of random-access configuration tables (in 3GPP TS 38.211) to adapt; and/or
- a changing indicator 2724 that a PRACH configuration is altered or changed.
The content may include RO muting/masking information 2704, for example, including muted/masked ROs and/or muting/masking rules.

Depending on the content, a different number of bits will be used or necessary to carry the PRACH adaptation indication 1204. The content of the PRACH adaptation indication 1204 may be limited or constrained by the size of the PRACH adaptation indication 1204.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. An apparatus comprising:
at least one processor; and
at least one memory storing instructions that, when executed by the at least one processor, cause the apparatus at least to perform:
receiving paging downlink control information on a physical downlink control channel from a radio access network;
determining a presence of a physical random-access channel adaptation indication in the paging downlink control information based at least on a short message indicator of the paging downlink control information; and
decoding the physical random-access channel adaptation indication from the paging downlink control information.

2. The apparatus of claim 1, wherein the instructions when executed by the at least one processor, cause the apparatus at least to perform:
applying the physical random-access channel adaptation indication for a random-access procedure.

3. The apparatus of claim 1, wherein:
the physical random-access channel adaptation indication is provisioned in at least one reserved bit of a short message in the paging downlink control information.

4. The apparatus of claim 3, wherein:
the short message indicator of the paging downlink control information is set to a bit field value of "10" or "11" when the physical random-access channel adaptation indication is provisioned in the at least one reserved bit of the short message.

5. The apparatus of claim 1, wherein:
the physical random-access channel adaptation indication is provisioned in at least one bit of a short message in the paging downlink control information.

6. The apparatus of claim 5, wherein:
the short message indicator of the paging downlink control information is set to a bit field value of "00" or "01" when the physical random-access channel adaptation indication is provisioned in the at least one bit of the short message.

7. The apparatus of claim 1, wherein:
the physical random-access channel adaptation indication is provisioned in at least one bit of the paging downlink control information excluding a short message; and
the short message indicator of the paging downlink control information is set to a bit field value of "10" when the physical random-access channel adaptation indication is provisioned in the at least one bit of the paging downlink control information excluding the short message.

8. The apparatus of claim 1, wherein:
the physical random-access channel adaptation indication is provisioned in at least one reserved bit of the paging downlink control information; and
the short message indicator of the paging downlink control information is set to a bit field value of "10" when the physical random-access channel adaptation indication is provisioned in the at least one reserved bit of the paging downlink control information.

9. The apparatus of claim 1, wherein:
the short message indicator of the paging downlink control information is set to a bit field value of "00" to indicate the presence of both the physical random-access channel adaptation indication and scheduling information for paging of user equipment.

10. The apparatus of claim 1, wherein:
the physical random-access channel adaptation indication indicates that at least a physical random-access channel resource is activated or deactivated.

11. The apparatus of claim 1, wherein:
the physical random-access channel adaptation indication indicates that at least one physical random-access channel resource is activated and used to respond to paging only.

12. The apparatus of claim 1, wherein:
the paging downlink control information further comprises scheduling information for paging user equipment.

13. The apparatus of claim 1, wherein:
the physical random-access channel adaptation indication indicates that at least a parameter value of a physical random-access channel configuration is changed.

14. The apparatus of claim 1, wherein the instructions when executed by the at least one processor, cause the apparatus at least to perform:
determining a size of the physical random-access channel adaptation indication based on the short message indicator.

15. An apparatus comprising:
at least one processor; and
at least one memory storing instructions that, when executed by the at least one processor, cause the apparatus at least to perform:
formatting paging downlink control information by:
setting at least a short message indicator of the paging downlink control information to indicate a presence of a physical random-access channel adaptation indication in the paging downlink control information; and
provisioning the physical random-access channel adaptation indication in the paging downlink control information; and
transmitting the paging downlink control information with the physical random-access channel adaptation indication on a physical downlink control channel.
